**Europäisches Patentamt**

**European Patent Office**

**Office européen des brevets**

(11) Veröffentlichungsnummer: **0 198 180**
A2

## (12) EUROPÄISCHE PATENTANMELDUNG

(21) Anmeldenummer: **86102187.1**

(22) Anmeldetag: **20.02.86**

(51) Int. Cl.⁴: **F 16 F 9/32**, F 16 F 9/02

(30) Priorität: **17.04.85 DE 3513839**

(43) Veröffentlichungstag der Anmeldung: **22.10.86**
**Patentblatt 86/43**

(84) Benannte Vertragsstaaten: **AT BE CH DE FR GB IT LI NL SE**

(71) Anmelder: **Fritz Bauer + Söhne oHG, Industriestrasse 12-14, D-8503 Altdorf b. Nürnberg (DE)**

(72) Erfinder: **Bauer, Hans Jürgen, Am Eichenhain 8, D-8503 Altdorf (DE)**
Erfinder: **Bauer, Hans-Peter, Ziegelhütte 9, D-8503 Altdorf (DE)**

(74) Vertreter: **Rau, Manfred, Dr. Dipl.-Ing. et al, Rau & Schneck, Patentanwälte Königstrasse 2, D-8500 Nürnberg 1 (DE)**

(54) **Fluidgefüllte gedämpfte Kolben-Zylinder-Einheit.**

(57) Eine fluidgefüllte Kolben-Zylinder-Einheit mit einem im wesentlichen zylindrischen, fluidgefüllten Gehäuse (1) weist einen in diesem Gehäuse (1) verschiebbar angeordneten Dämpfungs-Kolben mit einer mit dem Kolben verbundenen, an einem Ende aus dem Gehäuse (1) herausgeführten Kolbenstange (4) auf, der einen an der Innenwand (6) des Gehäuses (1) führend anliegenden, relativ zur Kolbenstange (4) zwischen zwei mit der Kolbenstange (4) verbundenen Anschlägen axial verschiebbaren Kolbenring (11) auf. Der Kolbenring (11) liegt bei Ausfahren der Kolbenstange (4) aus dem Gehäuse (1) unter Freilassen mindestens einer Durchströmöffnung (28) gegen den einen Anschlag und beim Einfahren der Kolbenstange (4) in das Gehäuse (1) unter Freilassen mindestens einer Durchlaßöffnung gegen den anderen Anschlag an.

Um durch Vereinfachung des Aufbaus des Kolbens höhere Verschleißfestigkeit und damit geringere Störanfälligkeit und damit eine genauere gleichbleibende Dämpfung, gegebenenfalls mit jeweils unterschiedlicher Einfahr- bzw. Ausfahr-Charakteristik zu erreichen, besteht der Kolben lediglich aus dem Kolbenring (11) und einem mit der Kolbenstange (4) fest verbundenen Kolbenträger (10), an dem die beiden Anschläge ausgebildet sind. Außerdem besteht der Kolbenring (11) aus einem hartelastischen Kunststoff.

EP 0 198 180 A2

Fluidgefüllte gedämpfte Kolben-Zylinder-Einheit
-----------------------------------------------------------

Die Erfindung betrifft eine fluidgefüllte Kolben-Zylinder-Einheit nach dem Oberbegriff des Anspruches 1.

Derartige Einheiten sind allgemein bekannt. Sie werden
als mit Druckgas gefüllte Gasfedern in vielfältigen
Einsatzgebieten angewendet, beispielsweise auch als
Hubhilfen für Heckklappen von Autos. Bei einer aus
der US-PS 3 937 45o bekannten Einheit der gattungsgemäßen Art liegt der Kolbenring einerseits führend
an der Innenwand des Gehäuses und andererseits annähernd
spielfrei an der Kolbenstange an. Er dient also zur
Führung in der Kolbenstange. Beim Ausfahren der Kolbenstange liegt der Kolbenring an einem an der Kolbenstange
befestigten ringförmigen Anschlag an, so daß Fluid
nur durch eine Dämpfungsbohrung im Kolbenring strömen
kann. Beim Einschieben der Kolbenstange in das Gehäuse
hebt der Kolbenring von dem ringförmigen Ventilkörper
ab und legt sich gegen einen Anschlagbund an der
Kolbenstange. Hierbei wird ein Ringkanal frei, durch den das Fluid strömen kann. Dieser bekannte Kolben ist aufwendig in seinem Aufbau und damit relativ verschleiß- und störanfällig.

Der Erfindung liegt daher die Aufgabe zugrunde, eine Kolben-Zylinder-Einheit der gattungsgemäßen Art so auszugestalten, daß durch Vereinfachung des Aufbaus des Kolbens höhere Verschleißfestigkeit und damit geringere Störanfälligkeit und damit eine genauere gleichbleibende Dämpfung, gegebenenfalls mit jeweils unterschiedlicher Einfahr- bzw. Ausfahr-Charakteristik, erreicht wird.

Diese Aufgabe wird erfindungsgemäß durch die Merkmale im Kennzeichnungsteil des Anspruches 1 gelöst.

Dadurch daß der Kolben nur noch aus zwei Teilen besteht, und dadurch, daß der Kolbenring aus einem hartelastischen Kunststoff besteht, ist eine außerordentlich einfache Fertigung und Montage möglich. Der aus Kunststoff bestehende Kolbenring braucht nur auf den Kolbenträger aufgeschnappt zu werden. Der aufgeschnappte Kolbenring hat besonders gute Reibungseigenschaften und damit eine verschleißarme Führung gegenüber der Innenwand des Gehäuses. Dadurch daß der Kolben nur noch aus zwei Teilen besteht, läßt sich die Dämpfungscharakteristik des Kolbens besonders einfach und genau einstellen, wobei durch die geringe Verschleiß- und Störanfälligkeit die Dämpfungseigenschaften exakt erhalten bleiben. Der Kolbenring übernimmt die Führung gegenüber der Innenwand des Kolbens. Gleichzeitig übernimmt er die klassische Funktion eines Kolbenrings, nämlich die Abdichtung gegenüber der Innenwand des Gehäuses. Schließlich ist der Kolbenring ein axial frei beweglicher Dämpfungserzeuger, mit dem also sehr einfach eine asymmetrische Dämpfung erreichbar ist, wobei selbstverständlich gleichermaßen eine symmetrische Dämpfung erzeugt werden kann. Vorteilhafte Merkmale und Ausgestaltungen ergeben sich aus den Unteransprüchen und der Beschreibung eines Ausführungsbeispiels anhand der Zeichnung. Es zeigt

Fig. 1 eine fluidgefüllte Kolben-Zylinder-Einheit in einer Außenansicht,

Fig. 2 einen Teil-Längs-Schnitt durch die Einheit nach Fig. 1 bei ausgefahrener Kolbenstange,

Fig. 3 die Darstellung nach Fig. 2 bei einfahrender Kolbenstange,

Fig. 4 einen Längsschnitt durch den Kolbenträger,

Fig. 5 einen Längsschnitt durch den Kolbenring,

Fig. 6 eine Draufsicht auf den Kolbenring gemäß dem Sichtpfeil VI in Fig. 5 und

Fig. 7 eine Draufsicht auf den Kolbenring gemäß dem Sichtpfeil VII in Fig. 6.

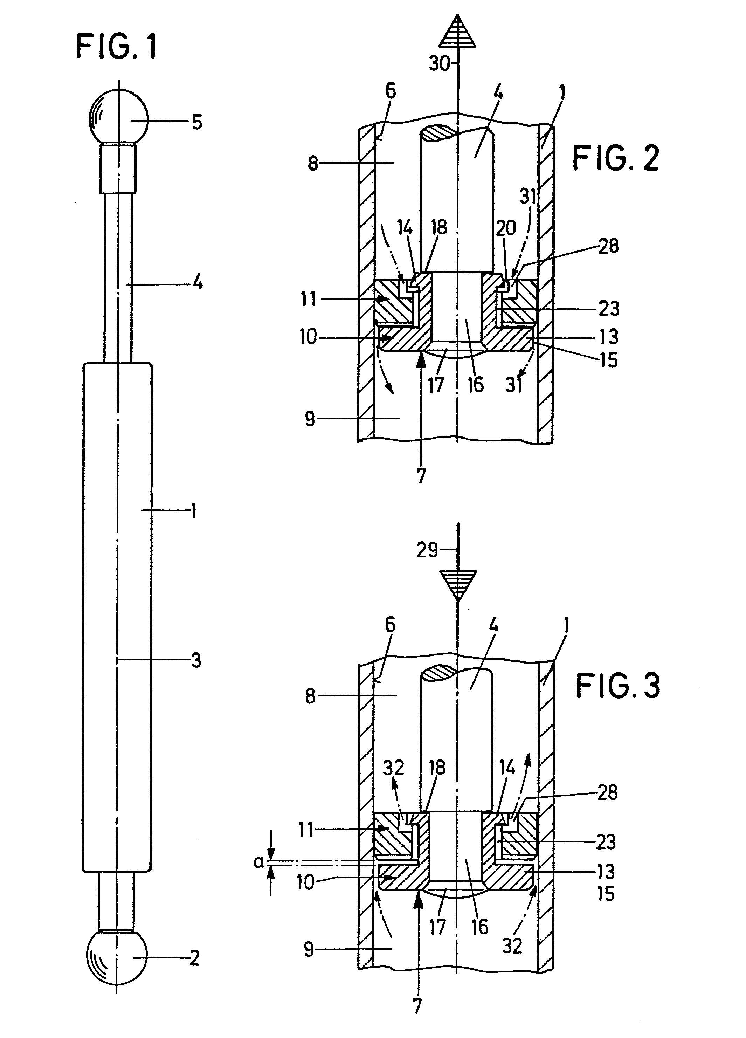

Bei der in Fig. 1 dargestellten Kolben-Zylinder-Einheit handelt es sich um eine Hubhilfe, beispielsweise für Heckklappen von Fahrzeugen. Sie kann als reine Gasfeder ausgeführt sein, also nur mit Druckgas gefüllt sein. Sie kann aber auch teilweise mit Druckgas und teilweise mit Flüssigkeit (Hydrauliköl) gefüllt sein. Sie kann auch ganz überwiegend mit Flüssigkeit gefüllt sein und nur einen kleinen Gasanteil zum Volumenausgleich aufweisen. Für Flüssigkeit und Gas wird als Oberbegriff "Fluid" verwendet. Solche fluidgefüllten Kolben-Zylinder-Einheiten sind allgemein bekannt und in großem Umfang im Einsatz. Die dargestellte Einheit weist ein etwa zylindrisches Gehäuse 1 auf, an dessen einem Ende ein Anschlußelement 2, beispielsweise ein sogenanntes Auge oder ein kugelsegmentförmiges Glied angebracht ist. An diesem Ende ist das Gehäuse 1 also dicht verschlossen. Aus dem anderen Ende des Gehäuses 1 ist eine koaxial zur Mittel-Längs-Achse 3 des Gehäuses 1 angeordnete Kolbenstange 4 herausgeführt, an deren freiem Ende ebenfalls ein Anschlußelement 5 angebracht ist, das ebenfalls als Auge oder als kugelsegmentförmiges Glied ausgebildet sein kann. Die Kolbenstange 4 ist in üblicher Weise abgedichtet aus dem Gehäuse 1 herausgeführt.

Das Gehäuse 1 weist eine zylindrische Innenwand 6 auf.

Am inneren Ende der Kolbenstange 4 ist ein Kolben 7 angebracht, mittels dessen der Innenraum des Gehäuses 1 in zwei Teil-Gehäuseräume 8 und 9 getrennt wird, wovon der erstgenannte Teil-Gehäuseraum 8 von der Kolbenstange 4 durchsetzt ist. Die beiden Teil-Gehäuseräume 8, 9 sind über den Kolben 7 miteinander verbunden. Sie sind mit Fluid gefüllt.

Der Kolben 7 besteht aus lediglich zwei Teilen, nämlich einem Kolbenträger 1o und einem Kolbenring 11. Der Kolbenträger hat den Grundaufbau einer Doppel-Flansch-Hülse. Er weist eine kreiszylindrische Hülse 12 auf, von deren beiden Enden sich zwei Flansche 13, 14 radial nach außen erstrecken. Der eine Flansch 13 erstreckt sich bis in die Nähe der Innenwand 6 des Gehäuses 1, ohne sie zu berühren, so daß dort ein Durchströmspalt 15 für das Fluid bleibt.

Der andere Flansch 14 hat nur eine verhältnismäßig
kurze radiale Erstreckung.

Die zylindrische Kolbenstange 4 weist an ihrem im
Gehäuse 1 befindlichen Ende einen koaxialen zylindrischen Zapfen 16 auf, auf den der Kolbenträger 1o
aufgeschoben ist, so daß seine Hülse 12 radial spielfrei
auf dem Zapfen 16 sitzt. Dieser wird dann an seinem
Ende vernietet, wobei der durch die Vernietung gebildete Kopf 17 den Kolbenträger 1o axial unverschiebbar
auf der Kolbenstange 4 hält.

Der eine Flansch 13 mit dem radial größeren Durchmesser
ist dem Kopf 17 benachbart, während der andere Flansch
14 gegen einen Anlagebund 18 der Kolbenstange 4 anliegt,
der am Übergang von der Kolbenstange 4 zum Zapfen 16
ausgebildet ist. Die einander zugewandten Flächen
des einen Flansches 13 und des anderen Flansches 14
bilden einen Anschlag 19 und einen anderen Anschlag 2o
für den Kolbenring 11.

Der Kolbenring 11 ist im wesentlichen ringzylindrisch
nach Art einer Hülse ausgebildet. An seiner einen
Stirnseite 21, mit der er zur Anlage an dem einen
Anschlag 19 des einen Flansches 13 kommen kann, sind
einige Durchströmöffnungen 22 ausgebildet, die auch
bei Anlage der einen Stirnseite 21 an dem einen Anschlag
19 geöffnet bleiben und einen begrenzten, also drosselnden Durchtritt von Fluid erlauben. Der Innendurchmesser di des Kolbenrings 11 ist größer als der Außendurchmesser der Hülse 12, so daß hier ein Ringkanal 23
gebildet wird, durch den das Fluid ungehindert strömen
kann.

0198180

Der Außendurchmesser da des anderen Flansches 14 des Kolbenträgers 1o ist etwas größer, beispielsweise um o,5 mm größer als der Innendurchmesser di des Kolbenrings 11. Da dieser aus einem hartelastischen, aber eben doch noch ausreichend elastisch nachgiebigen Kunststoff besteht, kann der Kolbenring 11 - vor der Befestigung des Kolbenträgers 1o an der Kolbenstange 4 - unter leichter elastischer Aufweitung über den anderen Flansch 14 geschoben werden. Anschließend geht die elastische Aufweitung wieder zurück, so daß der Kolbenring 11 auf dem Kolbenträger 1o angebracht ist. Um dieses Aufschieben des Kolbenrings 11 auf den Kolbenträger 1o zu erleichtern, ist die Umfangsfläche des anderen Flansches 14 als sich kegelstumpfförmig nach außen verjüngende Aufschubfläche 24 ausgebildet. Auf der der einen Stirnseite 21 abgewandten, dem anderen Flansch 14 benachbarten Seite weist der Kolbenring 11 eine innere, zu seiner anderen Stirnseite 25 hin offene ringförmige Ausnehmung 26 auf, deren sich radial erstreckende Fläche 27 zur Anlage gegen den anderen Anschlag 2o am Flansch 14 kommt, wobei dann die Ausnehmung 26 den anderen Flansch 14 aufnimmt. In dieser Ausnehmung 26 sind Durchlaßöffnungen 28 für das Fluid ausgebildet, durch die bei Anlage des Kolbenrings 11 mit seiner Fläche 27 gegen den anderen Anschlag 2o noch Fluid unter Drosselung strömen kann.

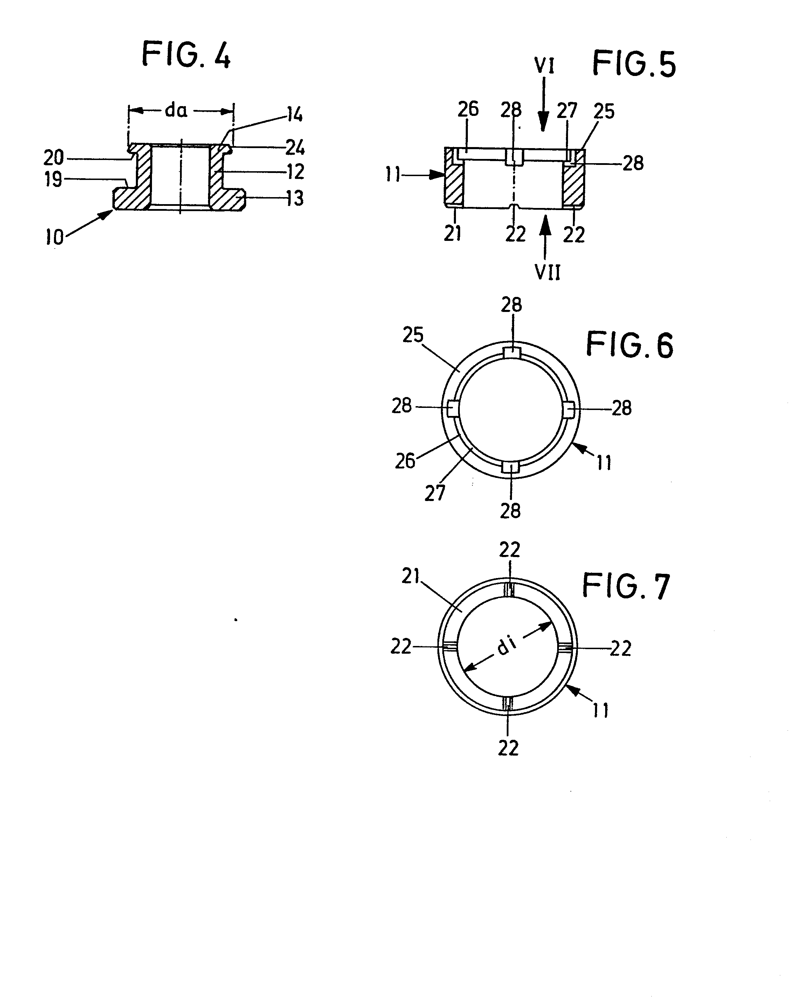

Durch entsprechend unterschiedliche Dimensionierung der Durchströmöffnungen 22 einerseits und der Durchlaßöffung 28 andererseits treten unterschiedliche Dämpfungen beim Einschieben der Kolbenstange 4 mit Kolben 7 in Einschubrichtung 29 (Fig. 3) bzw. beim Ausfahren in Ausfahrrichtung 3o (Fig. 2) auf.

Wie aus Fig. 2 hervorgeht, legt sich beim Ausfahren der Kolbenstange 4 in Ausfahrrichtung 3o der Kolbenring 11 mit seiner einen Stirnseite 21 gegen den einen Anschlag 19 am Flansch 13. Da beim Ausfahren der Teil-Gehäuseraum 8 verkleinert wird, strömt das Fluid entsprechend den Strömungspfeilen 31 durch die in ihrem Querschnitt völlig offene Ausnehmung 26 und den Ringkanal 23. Eine Drosselung dieser Fluidströmung erfolgt in den Durchströmöffnungen 22, da ansonsten der Kolbenring 11 mit seiner einen Stirnseite 21 weitgehend abgedichtet auf dem einen Anschlag 19 des einen Flansches 13 anliegt. Anschließend strömt das Fluid durch den Spalt 15 zwischen dem einen Flansch 13 und der Innenwand 6 des Gehäuses. Dieser Durchströmspalt 15 kann noch dadurch vergrößert sein, daß der eine Flansch 13 beispielsweise durch Abflachungen eine nichtzylindrische Außenfläche hat. Er kann beispielsweise also einen polygonalen Querschnitt aufweisen. Die Ausfahrbewegung der Kolbenstange 4 mit Kolben 7 wird also gedämpft.

Beim Einschieben bzw. Einfahren der Kolbenstange 4 mit Kolben 7 entsprechend der Einschubrichtung 29 legt sich der Kolbenring 11 mit seiner Fläche 27 gegen den anderen Anschlag 2o am anderen Flansch 14, so daß dort nur noch die Durchlaßöffnungen 28 frei sind. Da bei dieser Bewegung der Teil-Gehäuseraum 9 verkleinert wird, strömt das Fluid aus diesem Teil-Gehäuseraum 9 entsprechend den Strömungspfeilen 32 durch den Durchströmspalt 15 und von dort zwischen dem einen Flansch 13 des Kolbenträgers 1o und der einen Stirnseite 21 des Kolbenrings 11 hindurch. Die Breite a dieses zwischen dem einen Flansch 13 und der einen Stirnseite 21 gebildeten Kanals entspricht der axialen Verschiebbarkeit des Kolbenrings 11 auf

0198180

dem Kolbenträger 1o. Anschließend fließt das Fluid
durch den Ringkanal 23 und von dort durch die Durchlaßöffnungen 28. Da die Fläche 27 des Kolbenrings 11
am anderen Anschlag 2o des Kolbenträgers 1o anliegt,
sind hier nur die Durchlaßöffnungen 28 geöffnet,
so daß dort eine Drosselung stattfindet. Auch die
Einschub- bzw. Einfahrbewegung ist also gedämpft.

# A n s p r ü c h e

1. Fluidgefüllte Kolben-Zylinder-Einheit mit einem
im wesentlichen zylindrischen, fluidgefüllten Gehäuse,
mit einem in diesem Gehäuse verschiebbar angeordneten
Dämpfungs-Kolben und mit einer mit dem Kolben verbundenen, an einem Ende aus dem Gehäuse herausgeführten
Kolbenstange, wobei der Kolben einen an der Innenwand
des Gehäuses führend anliegenden, relativ zur Kolbenstange zwischen zwei mit der Kolbenstange verbundenen
Anschlägen axial verschiebbaren Kolbenring aufweist,
wobei der Kolbenring bei Ausfahren der Kolbenstange
aus dem Gehäuse unter Freilassen mindestens einer
Durchströmöffnung gegen den einen Anschlag und beim
Einfahren der Kolbenstange in das Gehäuse unter Freilassen mindestens einer Durchlaßöffnung gegen den anderen
Anschlag anliegt, dadurch gekennzeichnet, daß der
Kolben (7) aus dem Kolbenring (11) und einem mit
der Kolbenstange (4) fest verbundenen Kolbenträger
(1o) besteht, an dem die beiden Anschläge (19, 2o)

ausgebildet sind, und daß der Kolbenring (11) aus
einem hartelastischen Kunststoff besteht.

2. Kolben-Zylinder-Einheit nach Anspruch 1, dadurch
gekennzeichnet, daß der Innendurchmesser (di) des
Kolbenrings (11) etwas kleiner ist als der Außendurchmesser (da) eines Anschlages (2o).

3. Kolben-Zylinder-Einheit nach Anspruch 1, dadurch
gekennzeichnet, daß der Kolbenträger (1o) und der
Kolbenring (11) jeweils einstückig ausgebildet sind.

4. Kolben-Zylinder-Einheit nach Anspruch 1, dadurch
gekennzeichnet, daß der Kolbenträger (1o) nach Art
einer Doppel-Flansch-Hülse ausgebildet ist, wobei
an dem einen Flansch (13) der eine Anschlag (19)
und an dem anderen Flansch (14) der andere Anschlag (2o)
ausgebildet sind.

5. Kolben-Zylinder-Einheit nach Anspruch 4, dadurch
gekennzeichnet, daß der Kolbenring (11) im wesentlichen
die Form einer Ringzylinderhülse aufweist, deren
eine Stirnseite (21) dem einen Anschlag (19) am Kolbenträger (1o) zugeordnet ist.

6. Kolben-Zylinder-Einheit nach Anspruch 5, dadurch
gekennzeichnet, daß die mindestens eine Durchströmöffnung (22) in mindestens einer der durch die eine
Stirnseite (21) und den einen Anschlag (19) gebildeten
Flächen ausgebildet sind.

7. Kolben-Zylinder-Einheit nach Anspruch 4, dadurch
gekennzeichnet, daß der Kolben-Ring (11) eine sich
radial erstreckende, dem anderen Anschlag (2o) zugeordnete Fläche (27) aufweist.

0198180

8. Kolben-Zylinder-Einheit nach Anspruch 7, dadurch gekennzeichnet, daß die mindestens eine Durchlaßöffnung (28) in mindestens einer der durch den anderen Anschlag (2o) oder die Fläche (27) gebildeten Flächen ausgebildet ist.

9. Kolben-Zylinder-Einheit nach Anspruch 2 und 4, dadurch gekennzeichnet, daß der andere Flansch (14) eine sich konisch nach außen verjüngende Aufschubfläche (24) aufweist.

# FIG.1

# FIG.2

# FIG.3

## FIG. 4

$d_a$

20
19
10

14
24
12
13

## FIG.5

VI

26    28    27    25

11

28

21    22    22

VII

## FIG.6

28

25

28          28

26

27

28

11

## FIG.7

22

21

22          $d_i$          22

11

22